# NEW EUROPEAN PATENT SPECIFICATION

(11) **EP 1 791 683 B2**
(45) Date of publication and mention of the opposition decision: **21.06.2023**
(45) Mention of the grant of the patent: 13.03.2013
(21) Application number: 05783838.5
(22) Date of filing: 19.09.2005
(51) Int. Cl.: B29C 67/00, B27N 5/00

(54) **METHOD FOR MANUFACTURING PRODUCTS BASED ON WOOD POWDER**
VERFAHREN ZUR HERSTELLUNG VON PRODUKTEN AUF HOLZPULVERBASIS
PROCEDE DE FABRICATION DE PRODUITS A BASE DE POUDRE DE BOIS

(30) Priority: 20.09.2004 SE 0402275
(43) Date of publication of application: 06.06.2007
(73) Proprietor: L3F Sweden AB, 545 93 Töreboda (SE)
(72) Inventor: Edvinsson, Jerry, 545 93 Töreboda (SE)
(74) Representative: Valea AB
(86) International application number: PCT/SE2005/001367
(87) International publication number: WO 2006/033621

(56) References cited:
- EP-A2- 0 426 363
- EP-A2- 0 431 924
- WO-A2-01/34371
- US-A- 3 655 098
- US-A- 6 007 318
- US-B1- 6 375 874

## Description

### FIELD OF THE INVENTION

The present invention relates to a method for manufacturing a continuous product of wood powder in accordance with the preamble of claim 1.

### BACKGROUND OF THE INVENTION AND PRIOR ART

Previously known products based on wood powder, such as chipboards and the like, are formed by means of moulding wood particles, preferably sawdust or cutter shavings, together with a binding agent. Such a board can then be used as building material in walls and floors, or for the production of furniture.

WO01/34371A2 disclose a 3D printing system and method. The system is configured to build individual cross sectional areas by using an ink jet printer head to deliver a reactant to the surface of a particulate material having a reactive surface. Another example of 3D printing is disclosed in WP 0,431,924 A2 in which a 3D printing system is disclosed. The 3D printing system applies a powder material and thereafter a layer of binder material to produce layers of material at selected regions.

Within many different fields, however, there is a need to be able to manufacture relatively large and geometrically complicated products at a low cost. This may concern products for direct use, such as building elements, ornamental mouldings, etc., as well as moulds and prototypes for the production of other products. For self-evident reasons, chipboards have a very limited usefulness when manufacturing more advanced products with a relatively complicated geometry.

Wood structures based on a homogenous wood material are often used for the production of moulds for casting large plastic components and when manufacturing different prototypes within, for example, the automobile and aircraft industry. However, such wood structures tend to become costly, since it is difficult to produce the complicated geometries being required In many situations in a rational way.

### OBJECT OF THE INVENTION AND SUMMARY OF THE INVENTION

It is an object of the invention to provide a method of the kind mentioned by way of introduction, which makes it possible to manufacture different types of products having different geometries in an efficient way at a relatively low cost.

This object is achieved by means of providing a method according to claim 1.

By means of the method according to the invention, where a layer of wood powder is applied onto a support, binding agent is deposited onto the wood powder layer, whereupon an additional layer of wood powder is applied onto the preceding wood powder layer, and such application of wood powder and such deposition of binding agent are alternately repeated a desired number of times, wherein wood powder of respective layers and of adjacent layers is bonded into a continuous product, products which previously have not been possible and/or profitable to produce can be manufactured.

The finished product, which can be obtained at a relatively low cost, has very good machining properties. Furthermore, without any further machining, it can exhibit an excellent accuracy of the order of ±1 mm, or even better. The dimensional accuracy of the product and the surface finish of the product can be controlled by choice of type of wood powder and choice of particle size of the used wood powder.

Other advantageous features and different embodiments of the invention are evident from the following description and dependent claims.

### BRIEF DESCRIPTION OF THE DRAWINGS

While referring to the attached drawings, a closer description of embodiments of the invention, serving as examples, will follow below.

In the drawings:
Fig. 1a is a perspective view of a computer-simulated product to be manufactured in accordance with the method according to the invention;
Fig. 1b is a view in accordance with Figure 1, where the computer-simulated product is divided into a plurality of horizontally located slices;
Fig. 2 is a partially cut perspective view of a device according to the invention;
Fig. 3 is a magnified view illustrating a feeder, a layer levelling unit including a scraper and a suction device, and a depositing means of the device according to the invention of Figure 2;
Fig. 4 is a schematic side view illustrating the layer levelling unit when levelling a wood powder layer; and
Fig. 5 is a schematic side view illustrating a variant of the device according to the invention where the layer levelling unit includes a brush.

### DETAILED DESCRIPTION OF PREFERRED EMBODIMENTS OF THE INVENTION

According to the invention, a wood powder and a binding agent are used for manufacturing continuous products. The expression wood powder refers to a powder made of a wood material. Different tree species, such as pine, spruce, birch and others, and different forms of wood originating from branches, trunk, stumps or roots of trees or in the form of wood waste, can be used as a starting material for producing the powder. The particles of the powder can exhibit different shapes and sizes. The particle size can be from relatively small, so that the wood powder obtains a flour-like consistency, to relatively large, implying that the individual particles can be distinguished at a visual inspection. Advantageously, however, the particles of a given powder are substantially of the same size in order to obtain a uniform quality of the final product. Examples of suitable materials are wood chips originating from machining of homogenous wood, such as sawdust, cutter shavings, or the like.

In addition to the wood material constituting the base of the powder and, accordingly, the base of the finished product, it is also possible to add small quantities of other substances/materials to the binding agent and/or to the powder in order to obtain specific properties of the product formed from the powder. Preferably, different substances can be added to the binding agent. One example of such an additive is colouring agent, colouring pigment, or the like, in order to give the end product a certain colour. By means of choosing different colours of the binding agent for different layers of the product, the finished product can obtain different colours on different visible surfaces.

The method according to the invention for manufacturing a continuous product of wood powder includes that a layer of wood powder is applied onto a support, that binding agent is deposited onto the wood powder layer, whereupon an additional layer of wood powder is applied onto the preceding wood powder layer. Such application of wood powder and such deposition of binding agent are alternately repeated a desired number of times, so that wood powder of each layer and of adjacent layers is bonded into a continuous product by means of the binding agent. Even though it usually is advantageous to alternately apply wood powder and binding agent, it should be observed that an individual wood powder layer could be formed by means of applying two or several thinner layers which together constitute the layer which subsequently is followed by a deposition of binding agent.

According to one advantageous embodiment of the method, binding agent is applied onto selected portions of each wood powder layer in order to form a specific geometry of the product by means of distribution of binding agent. In the production, the portions where binding agent has been deposited will form the product, while remaining portions of the wood powder layers will remain unbonded, and thus not contribute to the finished product. However, before it is removed, the unbonded material can constitute a support for the product during its manufacture.

However, if a relatively simple product, for example one exhibiting a constant cross-section, is to be manufactured, one variant of the method could be that the shape of the receptacle is used for the formation of the delimiting surfaces of the product, so that the product obtains substantially the same shape as the receptacle. This implies that wood powder and binding agent can be applied across the entire surface of the support.

It would also be possible to apply wood powder onto selected portions of the support in order to form a specific geometry of the product by means of distribution of wood powder. Accordingly, this implies that both the wood powder and the binding agent are applied onto the selected portions, resulting in a product which substantially lacks supporting portions in the form of unbonded powder during the manufacture.

The method can be carried out such that each layer is allowed to dry before the next layer is applied. If a faster process is desired, one or several layers of wood powder can be applied before the binding agent which has been deposited onto the immediately preceding layer has dried completely. In such a case, the wood powder should be heated in order to reduce the drying time for the binding agent, for example by means of preheating the wood powder before laying out the wood powder in layers. The rate at which the layers can be laid can be increased by means of heating the wood chip material, for example to about 50°C, which enables the binding agent to cure even if a new layer is started before the preceding layer has dried completely. Irrespective whether the immediately preceding layer is allowed to dry substantially completely or only partially before applying the next layer, heating of the wood powder can reduce the production time for a component in an efficient way. Conveniently, the wood powder is heated to a temperature in the interval 30-70°C, and preferably to about 50°C, in order to reduce the drying time.

Different types of binding agent can be used. The useful binding agents have in common that they are capable of bonding together the particles in the wood powder so that the desired strength of the product can be achieved. The binding agent can be water-based, and the binding agent is suitably water resistant. Whether the binding agent should be water resistant or not, however, depends on the product which is to be manufactured and possible post-treatments of the product. One suitable binding agent is wood glue, but also a hot melt adhesive, for example a plastic-based one, which is heated during application could be used. Most wood glues which are present on the market have the advantages of being relatively cost efficient and easy to handle, environmentally friendly and particularly suited for bonding wood materials.

The concentration or dilution of the binding agent (water content if a water-based binding agent is concerned) can be varied. Thereby, also the moisture content of the used wood powder has a certain importance, since the total amount of moisture originating from the powder and the binding agent has to be capable of at least wetting the material to the desired extent in order to enable bonding of selected portions of the wood powder layers. The moisture content of the wood powder should also be adapted in order to give the powder properties making the powder easy to work when being laid out in layers.

When laying out wood powder, wood powder layers which usually exhibit a thickness in the interval 0.1-5 mm, and preferably a thickness of about 1 mm, are formed. Naturally, also other layer thicknesses may occur. To a certain extent, the layer thickness determines the accuracy of the manufactured product, and is also related to the particle size in such a way that the smaller the particle size is, the smaller the achievable layer thickness is. Accordingly, the choice of particle size and layer thickness influence the accuracy of the product. Both tolerances and surface finish of the product can be controlled by choice of particle size and layer thickness. As the particle size can be said to be the factor primarily determining the resolution of the product, it is often advisable to filter the wood powder in order to minimize the variation in particle size. For many products, a particle size in the size interval 0.01-5 mm, and preferably of the order of 0.1-2 mm, can be used when forming the wood powder layers. If, for example, a particle size of 1 mm is chosen, it can be ensured by means of filtration that the particles in one and the same powder has a size which does not exceed, for example, 1.2 mm, and a size which does not fall below, for example, 0.8 mm.

Accordingly, according to the invention, a wood powder and binding agent, preferably a water-based and water resistant wood glue, are utilised in order to produce a three-dimensional wood product by means of building up bonded wood powder in layers. When manufacturing a product, conveniently a three-dimensional computer model of the desired product is created. In the computer model, which can be visualized on a display, the product is divided into different horizontally located layers or slices, which can exhibit different thickness, for example, the slices can be of the order of 1 mm thick. Information about the thickness and extension of the slices in the horizontal plane is then used for the production of a product which imitates the model by means of guiding the depositing means to deposit binding agent onto an area of the wood powder layer in question which corresponds to the extension of the model slice in the horizontal plane. Thereby, its is ensured that the shape and the relative size of the area onto which binding agent is deposited corresponds to the corresponding model slice. Conveniently, the thickness of the wood powder layer is adapted to the thickness of the model slice in question.

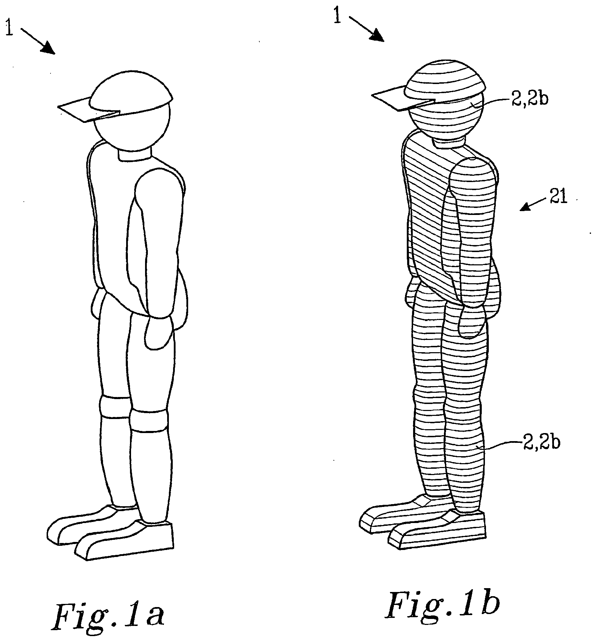

Figure 1a illustrates an example of a model 1 in the form of a doll and Figure 1b schematically illustrates how the model 1 has been divided into horizontally oriented slices 2. Accordingly, the model exists in a computer program for three-dimensional reproduction. The computer-based model 1 is then used as input data to a control unit of the device according to the invention in order to create a substantially similar, real product, in the example a doll, consisting of wood powder. Accordingly, the finished three-dimensional product 21 according to the invention may look like the model 1 in Figure 1b. Naturally, the layers 2b corresponding to the slices 2 of the model will be more difficult to distinguish in the real product 21 if thinner layers are used for building up the product. As is evident from Figure 1b, the shape of the product is created by means of arranging a plurality of layers, preferably more than 10 and usually more than 50, which can exhibit areas of different sizes and different shapes, to overlap each other. However, the number of layers is of course dependent upon the size of the product and, in the extreme case, for example two layers could be sufficient in order to create a relatively thin product. Accordingly, if a product which is 1 meter high is to be created from layers having a thickness of the order of 1 mm, approximately 1000 layers will be required.

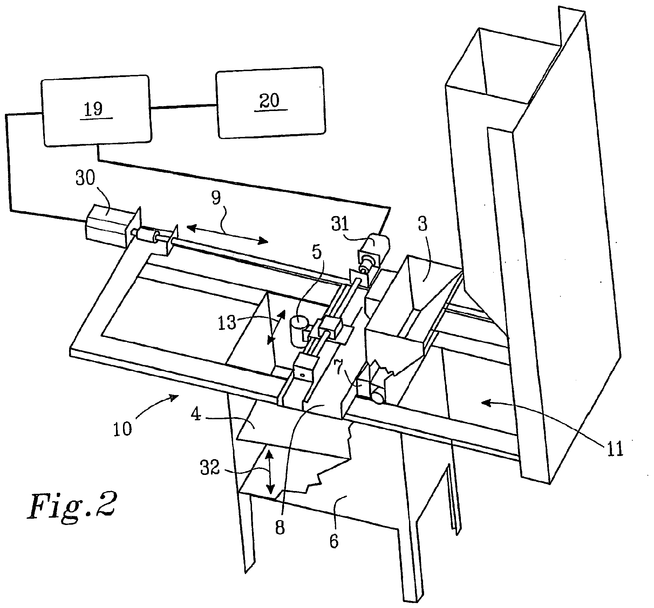

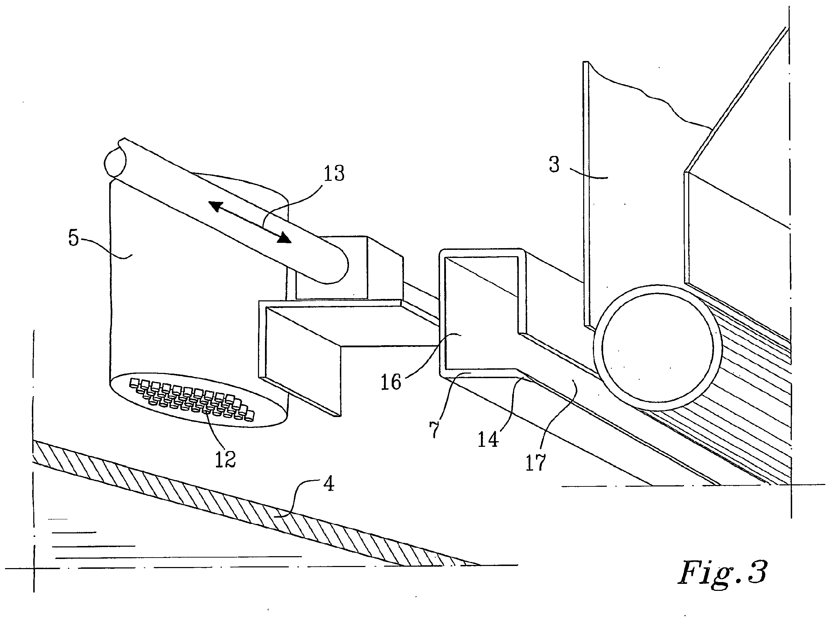

Figures 2 and 3 illustrate a device for manufacturing a continuous product of wood powder. The device includes a means 3 for feeding out wood powder forming a layer onto a support 4 and a means 5 for depositing a binding agent onto selected portions of the applied wood powder layer.

The device illustrated in Figures 2 and 3, it exhibits a receptacle 6 (which, for reasons of clarity, is shown cut off at the front) inside which a base plate 4, being vertically adjustable along a geometric axis 32 and constituting said support, is arranged. At the upper end of the receptacle 6, the feeding means 3 (in the following called the feeder 3), the depositing means 5 and a unit 7 for levelling the layer and/or for removing excessive wood powder are arranged on a movable carriage 8. The feeder 3 and the layer levelling unit 7 are arranged for reciprocating motion along at least one geometric axis 9, i.e. in a direction parallel to the base plate 4, for example from a first end 10 to a second end 11 of the receptacle 6 and vice versa. The depositing means 5 which exhibits at least one nozzle 12, preferably a plurality of individual nozzles 12, for deposition of binding agent, should be arranged for displacement along two geometric axes 9, 13 in a plane parallel to the support 4 in order to enable deposition of binding agent onto desired areas. In principle, also a depositing means arranged for displacement along only one axis could be used, but this requires a depositing means which exhibits a large number of separate nozzles arranged along an axis being perpendicular in relation to the displacement axis of the depositing means.

Even though the layer levelling unit 7, as illustrated, is arranged for displacement together with the feeder 3, in another embodiment these two components could be arranged for individual displacement along the axis in question. In the same way, the depositing means could be arranged separately in relation to the feeder and/or the layer levelling unit.

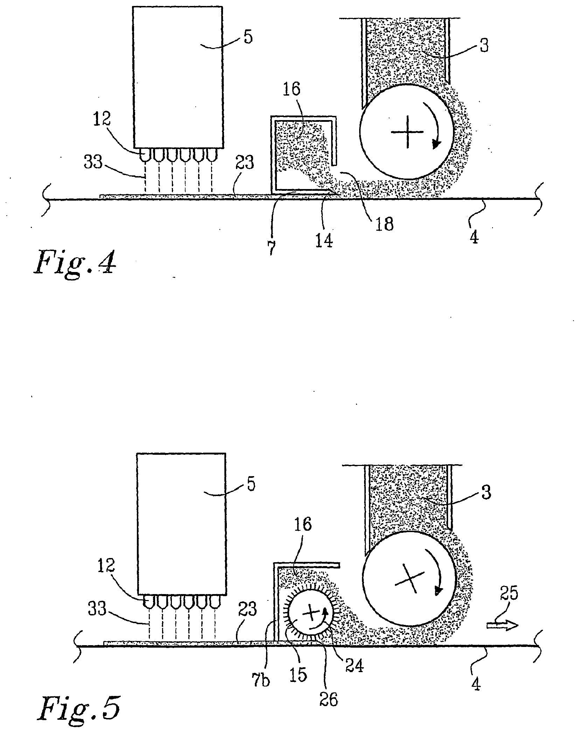

The layer levelling unit 7 can include a scraper 14 which is displaced substantially in parallel to the support 4 for removing excessive wood powder, for the purpose of obtaining the desired layer thickness. As an alternative to a scraper, or in combination with a scraper, a rotating brush 15, see Figure 5, can be displaced in the same way substantially in parallel to the support 4 in order to remove excessive wood powder by means of brushing, so that the desired layer thickness is obtained. There is also a possibility to arrange a suction device 16 for sucking up and transporting away excessive wood powder. Such a suction device 16 can be used separately or in combination with a scraper 14 and/or a brush 15.

As illustrated in Figures 2 and 3, the intake 17 to a suction device 16 is displaced together with a scraper 14 in order to suck up wood powder in the immediate vicinity of the scraper 14. Excessive wood powder is brought up onto the scraper 14, wherein the excessive powder almost simultaneously or only shortly thereafter is sucked in through apertures or, as illustrated, a slit 18 being arranged in the suction device 16, for further transport. There is a possibility to adjust the characteristics of the layer levelling unit 7 by means of adjusting the relative distance between the scraper 14 and the wood powder bed, as well as changing the position of the apertures/slit 18 of the suction device 16 in relation to the scraper 14 and the wood powder bed, and/or regulating the suction capacity of the suction device 16.

In Figure 2, also a control unit 19 and a display 20 are illustrated schematically. The control unit 19 can include a computer provided with a program for converting a three-dimensional model into signals, said signals being used for controlling different components of the device, such as the feeder 3, the depositing means 5, the levelling unit 7 and the base plate 4. By means of transmitting these signals to motors 30, 31 being arranged for driving the mechanical components, the product according to the invention can be produced in an automatic way.

The respective layer, corresponding to a slice of the model, is produced by means of feeding out wood powder from the feeder 3 in a uniform layer onto the base plate 4, while the feeder 3 is displaced in relation to the base plate 4. Simultaneously, the scraper 14 and the suction device 16 are used for levelling the applied wood powder layer and sucking up excessive wood powder.

Thereafter, binding agent is deposited by means of the nozzle 12 of the depositing means 5, while displacing the nozzle 12 in relation to the base plate 4, onto an area corresponding to the shape and size of the desired slice. After completion of a layer, the base plate 4 is lowered before application of the next layer, so that the level of the upper surface of the product in relation to the feeder 3 is maintained. When depositing binding agent, the quantity of binding agent should be such that the binding agent sinks into the preceding layer, so that the two adjacent layers are bonded to each other. By means of repeating the method for all "slices", the desired product will be produced in accordance with the used computer model.

When all layers are laid and the product has dried, the receptacle 6 can be emptied of unbonded wood powder and the product can be removed from the receptacle. The continuous product can be post-treated by means of polishing and/or filling in order to obtain a smoother and/or more sealed surface. For instance, if desired, plastic can be sprayed onto the product in order to improve its surface properties.

Figure 4 schematically illustrates the layer levelling unit 7, when levelling a wood powder layer 23. The scraper 14 is arranged for reducing the thickness of the wood powder layer by means of wood powder being brought up onto the upper side of the scraper 14 and then being removed by means of the suction device 16. The layer levelling device 7 is arranged for being displaced substantially in parallel to the base plate 4 at a distance from it which results in the desired layer thickness of the applied wood powder being obtained. During this displacement, the suction device will continuously suck up excessive wood powder, via the slit 18 at the upper side of the scraper. Binding agent 33 is deposited by means of a plurality of nozzles 12 of the depositing means 5.

Figure 5 illustrates a variant of a layer levelling unit 7b. In this embodiment, the layer levelling unit 7b includes a brush 15 being arranged together with a suction device 16 for levelling the layers and removing excessive wood powder.

Conveniently, the extension of the brush 15 in a longitudinal direction corresponds to the extension of the base plate 4 in the corresponding direction. The brush can be provided with bristles made of steel, for example, but also other materials could be used. The brush 15 is arranged for being displaced substantially in parallel to the base plate 4 at a distance from it which results in the desired layer thickness of the applied wood powder being obtained. During this displacement, the brush 15 is rotated, preferably counter-clockwisely 24, if the translational movement 25 of the brush is directed as shown in Figure 5, implying that the rotational direction 24 and the translational movement 25 are directed in the same direction in a point 26 of the brush 15 closest to the support 4.

In addition to the exemplifying embodiments described in this application, there are of course other ways of practising the invention within the scope of the inventive idea, and it is emphasized that the invention is only limited to the scope of protection being defined by the following claims.

## Claims

1. A method for manufacturing a continuous product of wood powder, **characterized in that** a layer (23) of wood powder is applied onto a support (4), that binding agent (33) is deposited onto the wood powder layer, whereupon an additional layer of wood powder is applied onto the preceding wood powder layer, and that such application of wood powder and such deposition of binding agent are alternately repeated a desired number of times, said binding agent being deposited on said wood powder layer in a quantity so that said binding agent sinks into said preceding wood powder layer, so that the two adjacent layers are bonded to each other,
wherein wood powder of each layer and of adjacent layers is bonded into a continuous product by means of the binding agent.

2. Method according to claim 1, **characterized in that** the binding agent (33) is applied onto selected portions of each wood powder layer (23) in order to form a specific geometry of the product by means of distribution of binding agent (33).

3. Method according to claim 1, **characterized in that,** for each wood powder layer, wood powder is applied onto selected portions in relation to the support in order to form a specific geometry of the product by means of distribution of wood powder.

4. Method according to any one of the preceding claims, **characterized in that** one or several layers of wood powder (23) is/are applied before the binding agent (33) having been deposited onto the immediately preceding layer has dried completely.

5. Method according to any one of the preceding claims, **characterized in that** a rotating brush (15) is displaced substantially in parallel to the support (4) in order to remove excessive wood powder, so that desired layer thickness is obtained.

6. Method according to any one of the preceding claims, **characterized in that** a scraper (14) is displaced substantially in parallel to the support (4) in order to remove excessive wood powder, so that desired layer thickness is obtained.

7. Method according to any one of the preceding claims, **characterized in that** a suction device (16) is used for sucking up excessive wood powder, so that desired layer thickness is obtained.

8. Method according to any one of claims 5 and 6 and according to claim 7, **characterized in that** the intake (18) to the suction device (16) is displaced together with the brush (15) and/or the scraper (14) in order to suck up wood powder in the immediate vicinity of the brush (15) and/or the scraper (14).

9. Method according to claim 8, **characterized in that** wood powder which already has been removed from the wood powder layer by means of the brush (15) and/or the scraper (14) is sucked up by means of the suction device (16).

10. Method according to any one of the preceding claims, **characterized in that** wood glue is used as binding agent.

11. Method according to any one of the preceding claims, **characterized in that** a water-based agent is used as binding agent (33).

12. Method according to any one of the preceding claims, **characterized in that** a water resistant agent is used as binding agent (33).

13. Method according to any one of claims 1-9, **characterized in that** a hot melt adhesive, preferably a plastic-based hot melt adhesive, is used as binding agent (33).

14. Method according to any one of the preceding claims, **characterized in that** wood powder layers (23) exhibiting a thickness in the interval 0.1-5 mm, and preferably a thickness of about 1 mm, are formed when laying out the wood powder.

15. Method according to any one of the preceding claims, **characterized in that** the wood powder is heated in order to reduce the drying time for the binding agent(33)

16. Method according to claim 15, **characterized in that** the wood powder is preheated before laying out the wood powder in layers.

17. Method according to claim 15 or 16, **characterized in that** the wood powder is heated to a temperature in the interval 30-70°C.

18. Method according to claim 17, **characterized in that** the wood powder is heated to about 50°C.

19. Method according to any one of the preceding claims, **characterized in that** wood powder having a particle size in the size interval 0.01-5 mm, and preferably of the order of 0.1-2 mm, is used when forming the wood powder layers (23).

20. Method according to any one of the preceding claims, **characterized in that** the continuous product is post-treated by means of polishing and/or filling in order to obtain a smoother and/or more sealed surface.

## Patentansprüche

1. Verfahren zur Herstellung eines kontinuierlichen Produkts aus Holzpulver, **dadurch gekennzeichnet, dass** eine Schicht (23) aus Holzpulver auf einen Träger (4) aufgetragen wird, **dass** Bindemittel (33) auf der Holzpulverschicht abgeschieden wird, wonach eine weitere Schicht aus Holzpulver auf die vorhergehende Holzpulverschicht aufgetragen wird, und **dass** das derartige Auftragen von Holzpulver und das derartige Abscheiden von Bindemittel abwechselnd für eine gewünschte Anzahl von Vorgängen wiederholt werden, wobei das Bindemittel auf der Holzpulverschicht in einer Menge abgeschieden wird, so dass das Bindemittel in die vorhergehende Holzpulverschicht einsinkt, so dass die zwei benachbarten Schichten miteinander gebunden werden, wobei Holzpulver einer jeden Schicht und von benachbarten Schichten mittels des Bindemittels in ein kontinuierliches Produkt gebunden wird.

2. Verfahren nach Anspruch 1, **dadurch gekennzeichnet, dass** das Bindemittel (33) auf ausgewählte Abschnitte einer jeden Holzpulverschicht (23) aufgetragen wird, um mittels der Verteilung des Bindemittels (33) eine spezielle Geometrie des Produkts zu bilden.

3. Verfahren nach Anspruch 1, **dadurch gekennzeichnet, dass,** für jede Holzpulverschicht, Holzpulver auf ausgewählte Abschnitte in Bezug auf den Träger aufgetragen wird, um mittels der Verteilung des Holzpulvers eine spezielle Geometrie des Produkts zu bilden.

4. Verfahren nach einem der vorstehenden Ansprüche,
**dadurch gekennzeichnet, dass** eine oder mehrere Schichten von Holzpulver (23) aufgetragen werden, bevor das Bindemittel (33), das auf der unmittelbar vorhergehende Schicht abgeschieden worden ist, vollständig getrocknet ist.

5. Verfahren nach einem der vorstehenden Ansprüche,
**dadurch gekennzeichnet, dass** eine rotierende Bürste (15) im Wesentlichen parallel zum Träger (4) verlagert wird, um überschüssiges Holzpulver zu entfernen, so dass die gewünschte Schichtdicke erhalten wird.

6. Verfahren nach einem der vorstehenden Ansprüche,
**dadurch gekennzeichnet, dass** ein Schaber (14) im Wesentlichen parallel zu dem Träger (4) verschoben wird, um überschüssiges Holzpulver zu entfernen, so dass die gewünschte Schichtdicke erhalten wird.

7. Verfahren nach einem der vorstehenden Ansprüche,
**dadurch gekennzeichnet, dass** eine Saugvorrichtung (16) zum Absaugen von überschüssigem Holzpulver verwendet wird, so dass die erwünschte Schichtdicke erhalten wird.

8. Verfahren nach einem der Ansprüche 5 und 6 und nach Anspruch 7, **dadurch gekennzeichnet, dass** der Einlass (18) zu der Saugvorrichtung (16) zusammen mit der Bürste (15) und/oder dem Schaber (14) verlagert wird, um Holzpulver in der unmittelbaren Nähe zur Bürste (15) und/oder zum Schaber (14) abzusaugen.

9. Verfahren nach Anspruch 8, **dadurch gekennzeichnet, dass** Holzpulver, das bereits von der Holzpulverschicht mittels der Bürste (15) und/oder des Schabers (14) entfernt worden ist, mittels der Saugvorrichtung (16) abgesaugt wird.

10. Verfahren nach einem der vorstehenden Ansprüche,
**dadurch gekennzeichnet, dass** Holzleim als Bindemittel verwendet wird.

11. Verfahren nach einem der vorstehenden Ansprüche,
**dadurch gekennzeichnet, dass** ein Mittel auf Wasserbasis als Bindemittel (33) verwendet wird.

12. Verfahren nach einem der vorstehenden Ansprüche,
**dadurch gekennzeichnet, dass** ein wasserfestes Mittel als Bindemittel (33) verwendet wird.

13. Verfahren nach einem der Ansprüche 1 bis 9,
**dadurch gekennzeichnet, dass** ein Schmelzkleber, vorzugsweise ein Schmelzkleber auf Kunststoffbasis, als Bindemittel (33) verwendet wird.

14. Verfahren nach einem der vorstehenden Ansprüche,
**dadurch gekennzeichnet, dass** Holzpulverschichten (23), die eine Dicke im Bereich von 0,1-5 mm und vorzugsweise eine Dicke von etwa 1 mm aufweisen, beim Auflegen des Holzpulvers gebildet werden.

15. Verfahren nach einem der vorstehenden Ansprüche,
**dadurch gekennzeichnet, dass** das Holzpulver erwärmt wird, um die Trocknungszeit für das Bindemittel (33) zu verkürzen

16. Verfahren nach Anspruch 15, **dadurch gekennzeichnet, dass** das Holzpulver vor dem schichtförmigen Auflegen des Holzpulvers vorgewärmt wird.

17. Verfahren nach Anspruch 15 oder 16, **dadurch gekennzeichnet, dass** das Holzpulver auf eine Temperatur im Bereich von 30-70 °C erwärmt wird.

18. Verfahren nach Anspruch 17, **dadurch gekennzeichnet, dass** das Holzpulver auf etwa 50 °C erwärmt wird.

19. Verfahren nach einem der vorstehenden Ansprüche,
**dadurch gekennzeichnet, dass** Holzpulver mit einer Teilchengröße im Größenbereich von 0,01-5 mm und vorzugsweise von ungefähr 0,1-2 mm beim Bilden der Holzpulverschichten (23) verwendet wird.

20. Verfahren nach einem der vorstehenden Ansprüche,
**dadurch gekennzeichnet, dass** das kontinuierliche Produkt mittels Polieren und/oder Füllen nachbehandelt wird, um eine glattere und/oder dichtere Oberfläche zu erhalten.

## Revendications

1. Procédé de fabrication d'un produit continu en poudre de bois,
**caractérisé en ce qu'**une couche (23) de poudre de bois est appliquée sur un support (4), qu'un agent de liaison (33) est déposé sur la couche de poudre de bois, après quoi une couche supplémentaire de poudre de bois est appliquée sur la couche de poudre de bois précédente, et qu'une telle application de poudre de bois et un tel dépôt d'agent de liaison sont répétés alternativement autant de fois que souhaité, ledit agent de liaison étant déposé sur ladite couche de poudre de bois en une quantité telle que ledit agent de liaison pénètre dans ladite couche de poudre de bois précédente, de sorte que les deux couches adjacentes soient collées l'une à l'autre, la poudre de bois de chaque couche et de couches adjacentes étant liée en un produit continu au moyen de l'agent de liaison.

2. Procédé selon la revendication 1, **caractérisé en ce que** l'agent de liaison (33) est appliqué sur des portions sélectionnées de chaque couche de poudre de bois (23) afin de former une géométrie spécifique du produit au moyen de la répartition d'agent de liaison (33).

3. Procédé selon la revendication 1, **caractérisé en ce que,** pour chaque couche de poudre de bois, de la poudre de bois est appliquée sur des portions sélectionnées par rapport au support, afin de former une géométrie spécifique du produit au moyen de la répartition de poudre de bois.

4. Procédé selon l'une quelconque des revendications précédentes, **caractérisé en ce qu'**une ou plusieurs couches de poudre de bois (23) sont appliquées avant que l'agent de liaison (33) ayant été déposé sur la couche immédiatement précédente, n'ait séché complètement.

5. Procédé selon l'une quelconque des revendications précédentes, **caractérisé en ce qu'**une brosse rotative (15) est déplacée essentiellement parallèlement au support (4) afin d'enlever l'excès de poudre de bois, de sorte à obtenir l'épaisseur de couche souhaitée.

6. Procédé selon l'une quelconque des revendications précédentes,
**caractérisé en ce qu'**un racloir (14) est déplacé essentiellement parallèlement au support (4) afin d'enlever l'excès de poudre de bois, de sorte à obtenir l'épaisseur de couche souhaitée.

7. Procédé selon l'une quelconque des revendications précédentes, **caractérisé en ce qu'**un dispositif d'aspiration (16) est utilisé pour aspirer l'excès de poudre de bois de sorte à obtenir l'épaisseur de couche souhaitée.

8. Procédé selon l'une quelconque des revendications 5 et 6 et selon la revendication 7, **caractérisé en ce que** l'entrée (18) du dispositif d'aspiration (16) est déplacée en même temps que la brosse (15) et/ou le racloir (14) afin d'aspirer la poudre de bois à proximité immédiate de la brosse (15) et/ou du racloir (14).

9. Procédé selon la revendication 8, **caractérisé en ce que** la poudre de bois ayant déjà été enlevée de la couche de poudre de bois au moyen de la brosse (15) et/ou du racloir (14) est aspirée au moyen du dispositif d'aspiration (16).

10. Procédé selon l'une quelconque des revendications précédentes, **caractérisé en ce que** de la colle à bois est utilisée comme agent de liaison.

11. Procédé selon l'une quelconque des revendications précédentes, **caractérisé en ce qu'**un agent à base d'eau est utilisé comme agent de liaison (33).

12. Procédé selon l'une quelconque des revendications précédentes, **caractérisé en ce qu'**un agent résistant à l'eau est utilisé comme agent de liaison (33).

13. Procédé selon l'une quelconque des revendications 1 à 9, **caractérisé en ce qu'**un adhésif thermofusible, de préférence un adhésif thermofusible à base de plastique, est utilisé comme agent de liaison (33).

14. Procédé selon l'une quelconque des revendications précédentes, **caractérisé en ce que** des couches de poudre de bois (23) présentant une épaisseur dans la plage de 0,1 à 5 mm, de préférence une épaisseur de 1 mm environ, sont formées lors de l'application de la poudre de bois.

15. Procédé selon l'une quelconque des revendications précédentes, **caractérisé en ce que** la poudre de bois est chauffée afin de réduire la durée de séchage de l'agent de liaison (33)

16. Procédé selon la revendication 15, **caractérisé en ce que** la poudre de bois est préchauffée préalablement à son application en couches.

17. Procédé selon la revendication 15 ou 16, **caractérisé en ce que** la poudre de bois est chauffée à une température dans la plage de 30 à 70 °C.

18. Procédé selon la revendication 17, **caractérisé en ce que** la poudre de bois est chauffée à 50 °C environ.

19. Procédé selon l'une quelconque des revendications précédentes, **caractérisé en ce que** la poudre de bois présentant une taille de particules dans la plage de 0,01 à 5 mm et de préférence de 0,1 à 2 mm, est utilisée lors de la formation des couches de poudre de bois (23).

20. Procédé selon l'une quelconque des revendications précédentes, **caractérisé en ce que** le produit continu est post-traité au moyen d'un polissage et/ou d'un remplissage afin d'obtenir une surface plus lisse et/ou plus scellée.
